# EUROPÄISCHE PATENTANMELDUNG

(11) **EP 1 914 037 A1**
(43) Veröffentlichungstag der Anmeldung: **23.04.2008**
(21) Anmeldenummer: 07019775.1
(22) Anmeldetag: 10.10.2007
(51) Int. Cl.: B23Q 11/00, B01D 21/24

(54) **Vorrichtung zur Förderung von mit Spänen versetztem Kühlschmierstoff**

(30) Priorität: 20.10.2006 DE 102006050407
(71) Anmelder: Bürener Maschinenfabrik GmbH, 33142 Büren (DE)
(72) Erfinder: Hötger, Konrad, 33181 Bad Wünnenberg-Leiberg (DE)
(74) Vertreter: Henseler, Daniela

(57) **Zusammenfassung**

Die Erfindung betrifft eine Vorrichtung zur Förderung von mit Feststoffrückständen, insbesondere Spänen, versetztem Kühlschmierstoff mit einem mindestens einen Einlaß aufweisenden zylindrischen Topf, um dessen mittlere senkrechte Topfachse ein mindestens einen Räumerarm aufweisender Räumer dreht, der die auf einem im wesentlichen ebenen Topfboden befindlichen Späne konzentriert und einer mit einem Ansaugbereich oberhalb des Topfbodens ausgebildeten Austrageinrichtung zuführt, die von mindestens einer Transportpumpe gebildet wird, wobei der Topfboden (3) eine Mulde (11) aufweist, auf die der Ansaugbereich (12) der Austrageinrichtung (9) gerichtet ist.

## Beschreibung

Die Erfindung betrifft eine Vorrichtung zur Förderung von mit Feststoffrückständen versetztem Kühlschmierstoff nach dem Oberbegriff des Anspruchs 1.

Aus DE 102 19 454 C1 ist eine Vorrichtung zur Förderung von mit Feststoffrückständen versetztem Kühlschmierstoff bekannt, die einen einen Einlaß aufweisenden zylindrischen Topf aufweist. Um die mittlere senkrechte Topfachse dieses Topfes dreht sich ein mindestens einen Räumerarm aufweisender Räumer, der die auf einem im wesentlichen ebenen Topfboden befindlichen Späne konzentriert und einer Austrageinrichtung zuführt. Vorteilhaft ist hierbei, daß durch die Form des Räumerarms ein schnelles und im wesentlichen vollständiges Konzentrieren der in dem Topf befindlichen Feststoffrückstände erreicht werden kann. Nachteilig hierbei ist, daß sich Späne an dem mindestens einen Räumerarm festsetzen können und dadurch der Drehung des Räumerarms folgen anstatt abgesaugt zu werden. Neben der Gefahr von Beschädigungen der Vorrichtung ist eine Verringerung der Förderkapazität an Feststoffrückständen die Folge.

Aufgabe der Erfindung ist es daher, eine Vorrichtung nach dem Oberbegriff des Anspruchs 1 zu schaffen, die ein verbessertes und wartungsarmes Fördern von mit Feststoffrückständen versetztem Kühlschmierstoff aus einem Topf erlaubt.

Diese Aufgabe wird durch die Merkmale des kennzeichnenden Teils des Anspruchs 1 gelöst.

Hierdurch wird eine Vorrichtung geschaffen, die über eine Mulde einen Ort schafft, in dem die Wirkung des Räumers auf die auf dem im wesentlichen ebenen Topfboden befindlichen Späne endet. Feststoffrückstände, die sich an dem Räumer festgesetzt haben, können sich bei jeder Umdrehung des Räumers lösen und damit freigegeben werden. Die Mulde bildet gleichzeitig eine Sammelstelle für Feststoffrückstände, von wo diese auf kürzestem Weg abgesaugt werden können. Die Vorrichtung ist dadurch besonders wartungsarm und verschleißfest.

Bevorzugt sind die Form und die Abmessungen der Mulde an die Ausbildung und Anordnung der Austrageinrichtung anpaßbar. Die Mulde kann dabei unterhalb der Ansaugöffnung der Austrageinrichtung zentriert sein, wodurch ein gleichmäßiges Absaugen von Feststoffrückständen aus der Mulde sichergestellt wird.

Bevorzugt ist ferner, den Räumer mit spiralabschnittförmig gekrümmten Transportflächen auszubilden, damit die Feststoffrückstände nicht dem Topfrand zugeführt, sondern vom Räumer auf dem Topfboden einem mittleren Topfbereich zugeführt werden, wo die Austrageinrichtung ansaugt. Die Feststoffrückstände brauchen dann nur kurze Wege zurückzulegen, bevor sie abtransportiert werden.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
Fig. 1 zeigt schematisch eine Draufsicht einer Vorrichtung zur Förderung von mit Spänen versetztem Kühlschmierstoff in Form eines Topfes,
Fig. 2 zeigt einen Schnitt nach A-A gemäß Fig. 1.

Die Erfindung betrifft eine Vorrichtung 1 zur Förderung von mit Feststoffrückständen aus der metallverarbeitenden Industrie, insbesondere Spänen, versetztem Kühlschmierstoff für einen Abtransport von einem Späneförderer, der üblicherweise an einer Bearbeitungsmaschine, insbesondere einer Werkzeugmaschine, angeordnet ist.

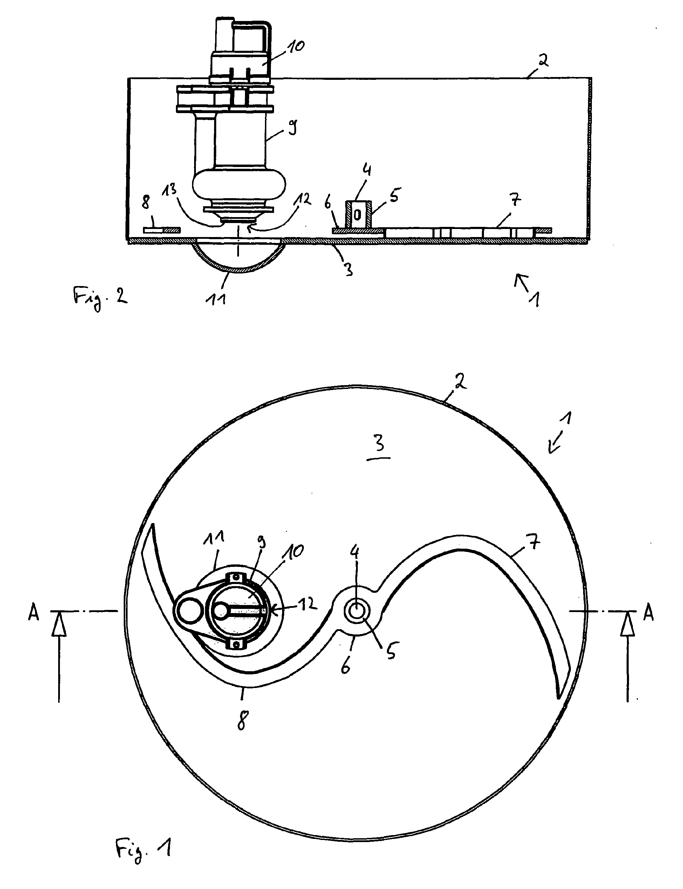

Wie Fig. 1 und 2 zeigen, umfaßt die Vorrichtung 1 einen Topf 2 der zylindrisch ausgebildet ist. Alternativ kann der Topf 2 einen zylindrischen Einsatz aufweisen. Der Topf 2 weist mindestens einen nicht dargestellten Einlaß auf, an den eine nicht dargestellte Rohrleitung angeschlossen ist, die den Einlaß des Topfes 2 mit einem Auslaß an einem Späneaufgabeteil eines Späneförderers verbinden kann.

Der Topf 2 besteht aus einem flachen Rundbehälter mit einem im wesentlichen ebenen Topfboden 3. Der Topf 2 besitzt eine mittlere senkrechte Topfachse 4, koaxial zu der eine nicht dargestellte Antriebswelle an einem Lagerzapfen 5 angreift. An dem Lagerzapfen 5 ist ein Räumer 6 befestigt, der damit zentral in dem Topf 2 drehbar gelagert ist. Der Räumer 6 umfaßt mindestens einen Räumerarm 7, hier zwei Räumerarme 7, 8, die an ihren inneren Enden verbunden sind und mit ihren äußeren Enden bis an den Topfrand reichen. Die Anzahl der Räumerarme, deren Form sowie die Räumergeschwindigkeit variiert in Abhängigkeit der zu transportierenden Spänemenge und der Späneform und kann im Bedarfsfall individuell angepaßt werden.

Der Räumer 6 konzentriert bei seiner Drehung um die Topfachse 4 die auf dem Topfboden 3 befindlichen Feststoffrückstände, insbesondere Späne, und führt diese einer Austrageinrichtung 9 mit einem Ansaugbereich 12 oberhalb des Topfbodens 3 zu. Die Austrageinrichtung 9 wird von mindestens einer Transportpumpe 10 gebildet. Der Topfboden 3 weist eine Mulde 11 auf, auf die der Ansaugbereich 12 der Austrageinrichtung 9 gerichtet ist.

Die Mulde 11 ist vorzugsweise breiter ausgebildet als eine Ansaugöffnung 13 der Austrageinrichtung 9. Die Mulde 11 besitzt eine maximale Tiefe im Bereich von vorzugsweise 10 bis 30 mm. Die Mulde 11 ist vorzugsweise als gewölbter Topfbodenabschnitt ausgebildet. Alternativ kann die Mulde 11 halbkugelschalenförmig ausgebildet sein. Weiterhin ist die Mulde 11 vorzugsweise zentriert zum Ansaugbereich 12 der Austrageinrichtung 9 angeordnet.

Die Form der Räumerarme 7, 8 ist wählbar. Vorzugsweise weisen die Räumerarme 7, 8 jeweils eine spiralabschnittförmig gekrümmte Transportfläche auf, die unter teilweisem Umlaufen der Topfachse 4 sich von der Topfmitte zum Topfrand hin erstrecken. Der Krümmungsbereich der Transportflächen besitzt nach innen gerichtete Normalen, die einen die Topfachse 4 benachbart umgebenden Bahnbereich des Topfbodens 3 kreuzen zum Ausüben von beim Drehen des Räumers 6 umlaufenden, in den Topf 2 gerichteten Schubkräften. In dem Bahnbereich, der in einem mittleren Bereich des Topfbodens 3 liegt, saugt eine Austrageinrichtung 9 an, so daß auch dort die Mulde 11 ausgebildet ist.

Die Räumerarme 7, 8 liegen vorzugsweise mit ihren Transportflächen auf dem Topfboden 3 auf, so daß gewährleistet ist, daß der Topfboden 3 durch den Räumer 6 freigeschabt wird. Ausgenommen hiervon ist der Bereich der Mulde 11.

Der Räumerarm 7, 8 besitzt ferner vorzugsweise einen ersten inneren Krümmungsabschnitt, der stärker gekrümmt ist als ein zweiter äußerer Krümmungsabschnitt. Der zweite äußere Krümmungsabschnitt schließt vorzugsweise mit dem Topfrand in Drehrichtung einen stumpfen Winkel ein, der 130° bis 170° betragen kann.

Die hier vorgesehenen zwei Räumerarme 7, 8 sind vorzugsweise gleich ausgebildet und zur Topfachse 4 um 180° zueinander verdreht angeordnet. Ferner ist die Verwendung nur einer Austrageinrichtung 9 in Form einer Transportpumpe 10 vorgesehen. Als Transportpumpe 10 bevorzugt ist dabei die Verwendung einer Schlürf-Tauchpumpe oder Cantilever-Pumpe, wodurch ein möglichst niedriger Flüssigkeitsspiegel erreicht werden kann.

Alternativ kann die Austrageinrichtung 9 zwei Transportpumpen 10 mit jeweils einem Ansaugbereich 12 umfassen, die gegenüberliegend benachbart zur Topfachse 4 angeordnet sein können und beide in einem die Topfachse 4 benachbart umgebenden Bahnbereich ansaugen können. Eine zweite Mulde ist dann vorzugsweise unterhalb des Ansaugbereichs 12 der zweiten Transportpumpe 10 angeordnet, wie vorstehend für die Mulde 11 beschrieben.

Der nicht dargestellte Einlaß für den Topf 2 ist vorzugsweise tangential angeordnet für ein randseitiges tangentiales Einströmen des Kühlschmierstoffes. Auf dem Topf 2 kann ein nicht dargestellter Spänebrecher aufgesetzt sein.

## Patentansprüche

1. Vorrichtung zur Förderung von mit Feststoffrückständen, insbesondere Spänen, versetztem Kühlschmierstoff mit einem mindestens einen Einlaß aufweisenden zylindrischen Topf, um dessen mittlere senkrechte Topfachse ein mindestens einen Räumerarm aufweisender Räumer dreht, der die auf einem im wesentlichen ebenen Topfboden befindlichen Späne konzentriert und einer mit einem Ansaugbereich oberhalb des Topfbodens ausgebildeten Austrageinrichtung zuführt, die von mindestens einer Transportpumpe gebildet wird, **dadurch gekennzeichnet, daß** der Topfboden (3) eine Mulde (11) aufweist, auf die der Ansaugbereich (12) der Austrageinrichtung (9) gerichtet ist.

2. Vorrichtung nach Anspruch 1, **dadurch gekennzeichnet, daß** die Mulde (11) breiter ausgebildet ist als eine Ansaugöffnung (13) der Austrageinrichtung (9).

3. Vorrichtung nach Anspruch 1 oder 2, **dadurch gekennzeichnet, daß** die Mulde (11) eine maximale Tiefe im Bereich von 10 bis 30 mm aufweist.

4. Vorrichtung nach einem der Ansprüche 1 bis 3, **dadurch gekennzeichnet, daß** die Mulde (11) als gewölbter Topfbodenabschnitt ausgebildet ist.

5. Vorrichtung nach einem der Ansprüche 1 bis 3, **dadurch gekennzeichnet, daß** die Mulde (11) halbkugelschalenförmig ausgebildet ist.

6. Vorrichtung nach einem der Ansprüche 1 bis 5, **dadurch gekennzeichnet, daß** die Mulde (11) zentriert zum Ansaugbereich (12) der Austrageinrichtung (9) angeordnet ist.

7. Vorrichtung nach einem der Ansprüche 1 bis 6, **dadurch gekennzeichnet, daß** der mindestens eine Räumerarm (7, 8) eine spiralabschnittförmig gekrümmte Transportfläche aufweist, die unter teilweisem Umlaufen der Topfachse (4) sich von einer Topfmitte zum Topfrand hin erstreckt und deren Krümmungsbereich nach innen gerichtete Normalen besitzt, die einen die Topfachse (4) benachbart umgebenden Bahnbereich des Topfbodens (3) kreuzen zum Ausüben von umlaufenden, in den Topf (2) gerichteten Schubkräften beim Drehen des Räumerarms (7, 8), wobei der Ansaugbereich (12) der Austrageinrichtung (9) und die Mulde (11) in dem Bahnbereich liegen.

8. Vorrichtung nach einem der Ansprüche 1 bis 7, **dadurch gekennzeichnet, daß** der Räumer (6) zwei gleiche zur Topfachse (4) um 180° zueinander verdreht angeordnete Räumerarme (7, 8) aufweist.

9. Vorrichtung nach einem der Ansprüche 1 bis 8, **dadurch gekennzeichnet, daß** der mindestens eine Räumerarm (7, 8) eine Länge aufweist, die sich kontinuierlich von einer Topfmitte zu einem Topfrand erstreckt.

10. Vorrichtung nach einem der Ansprüche 1 bis 9, **dadurch gekennzeichnet, daß** der Einlaß für mit Spänen versetzten Kühlschmierstoff tangential oder radial in den Topf (2) eintritt.

11. Vorrichtung nach einem der Ansprüche 1 bis 10, **dadurch gekennzeichnet, daß** die mindestens eine Transportpumpe (10) als Schlürf-Tauchpumpe ausgebildet ist.

12. Vorrichtung nach einem der Ansprüche 1 bis 11, **dadurch gekennzeichnet, daß** die Austrageinrichtung (9) mindestens zwei zueinander beabstandete Ansaugbereiche (12) aufweist, denen jeweils eine Mulde (11) im Topfboden (3) zugeordnet ist.
